# EUROPEAN PATENT APPLICATION

(11) **EP 1 296 432 A1**
(43) Date of publication of application: **26.03.2003**
(21) Application number: 02078946.7
(22) Date of filing: 23.09.2002
(51) Int. Cl.: H02H 7/085

(54) **Driver device and method for detecting a squeezing by an electric window or sliding roof of a vehicle**

(30) Priority: 21.09.2001 NL 1019010
(71) Applicant: N.V. Nederlandsche Apparatenfabriek NEDAP, 7141 DC Groenlo (NL)
(72) Inventor: Heilersig, Jan Hendrik, 7078 AK Megchelen (NL)
(74) Representative: Prins, Adrianus Willem

(57) **Abstract**

The invention concerns a driver device for electrically driving a motor for sliding a panel of an electric window or sliding roof of a vehicle. The driver device is provided with a supply circuit for generating a pulse-width modulated supply voltage for driving the motor with a variable speed. The driver device is further provided with a rectifier circuit which is connected on one side with the supply circuit for obtaining, on the basis of the pulse-width modulated supply voltage, a direct voltage whose magnitude is dependent on the pulse width of the supply voltage, and which is connected on the other side with the motor for driving the motor with the direct voltage, the speed of the motor being dependent on the magnitude of the direct voltage.

## Description

The invention relates to a driver device for electrically driving a motor for sliding a panel of an electric window or sliding roof of a vehicle between a first and second extreme position, while an opening of the vehicle in the first position is closed by the panel and in the second position is at least in part cleared by the panel, the driver device being provided with a supply circuit for generating a supply voltage for driving the motor, the driver device further comprising a detection circuit for detecting the current through the motor for detecting the possible squeezing of an object between the panel and the opening, the detection circuit generating an alarm signal when the magnitude of the current, or a quantity derivable therefrom, such as an increase of the magnitude of the current or an increase of the magnitude of the current per unit time, exceeds at least one predetermined threshold value.

The invention further relates to a method for detecting a squeezing by a motor-driven panel of an electric window or sliding roof of a vehicle, the panel being slidable between a first and second extreme position, while an opening of the vehicle in the first extreme position is closed off by the panel and in the second extreme position is at least in part cleared by the panel, wherein the motor is driven by a supply voltage and wherein the current through the motor is detected for detecting the possible squeezing of an object between the panel and the opening, wherein a squeezing is detected when the magnitude of the current, or a quantity derivable therefrom, such as an increase of the magnitude of the current or an increase of the magnitude of the current per unit time, exceeds at least one predetermined threshold value.

Furthermore, the invention relates to a sliding roof or electric window of a vehicle provided with such a driver device and to a vehicle provided with at least one sliding roof and/or at least one electric window comprising such driver device.

The invention also relates to a vehicle provided with such an assembly.

The known driver device and method are intended to detect a squeezing of, for instance, a hand or head.

Such a driver device and method are known from the German Offenlegungsschrift 26 10 550. In the Offenlegungsschrift it is described that it is known per se that a squeezing of, for instance, a hand or head of a person by the panel of the vehicle results in an increase of the current through the motor driving the panel involved. This rise of the current can be detected, for instance, for the purpose of switching a relay to invert the direction of rotation of the motor.

A problem of the known device is that squeezing is often not detected timely. This has as a result that the force exerted on, for instance, the hand or the head during squeezing can take too high a value. There are, for instance, regulations requiring that such a force does not exceed 100N.

Simply lowering the threshold value for the purpose of earlier detection of the squeezing has as a disadvantage that, for instance, the panel's moving stiffly as a result of fouling and/or temperature variations may also be detected as a squeezing.

The object of the invention is to provide a solution to the above-stated problems.

To that end, the driver device according to the invention is characterized in that the supply circuit is arranged to vary the supply voltage for varying the speed of the motor, the driver device being further provided with a control device which controls the supply circuit for varying the speed of the motor, and the control device being further arranged to cause the motor to run with a first speed when the panel is in a predetermined first path of movement between the first and second extreme position and to cause the motor to run with a second speed when the panel is in a predetermined second path of movement between the first and second extreme position, whilst the panel within the first path of movement is further away from the closed position of the panel than when the panel is in the second path of movement, and wherein the second speed is less than the first speed, so that a squeezing of an object of a particular stiffness results per unit time in a greater increase of the current in the second path of movement than in the first path of movement, as a result of which in the second path of movement a squeezing can be detected with a relatively high sensitivity.

The invention is based on the insight that the increase in the current through the motor lags behind the squeeze force in that much energy is stored in the rotation of the motor. This energy is directly proportional to the square of the speed. By lowering the speed of the motor in the second path of movement, an increase of the current as a result of a squeezing will become visible sooner. Further, due to the lower speed, the speed of the panel is lower and so upon squeezing the rise of the squeeze force and the rise of the motor current will be less steep.

Basically, therefore, squeezing is caused by a rotation energy stored in the motor on the one hand and the increase of the current on the other hand. By reducing the rotation energy in the motor by reducing the speed, the current will increase sooner.

In practice, the second path of movement will extend in a squeeze-sensitive area. What applies here, in particular, is that the second path of movement is located in a part of the complete path of movement between the first and second position that includes the closed position. Preferably, therefore, the opening left clear by the panel is smaller in the second path of movement than in the first path of movement. In particular, the second path of movement includes the closed position of the panel. The second path of movement can have a length of, for instance, 200 mm.

The alarm signal can be generated, for instance, when within a predetermined period of time the current increases by more than a predetermined threshold value.

In particular, the first and the second path of movement together form the path between the first and second position. In such a driver device, therefore, two different paths are involved, with two associated different speeds of the motor. In a first variant according to the invention, it is possible that squeezing is detected only when the panel is in the second path of movement. It is also possible, however, that the detection circuit detects a squeezing when the panel is in the first path of movement when a first threshold value is exceeded and that the detection circuit detects a squeezing when the panel is in the second path of movement when a second threshold value of the at least one threshold value is exceeded. The first and second threshold values may be equal to each other, but this is not necessarily so. In particular, the first threshold value is greater than the second threshold value.

In this way, squeezing events can also be detected when the panel leaves the opening clear for a large part, so when, for instance, relatively. large objects are being squeezed. In practice, this will not involve hands and fingers, so that in that case it is less bad that the squeeze force can run up further. Regulations require that the squeeze force be not greater than, for instance, 100 N when the respective opening is smaller than 200 mm.

In a particular embodiment of the driver device, it further holds that the alarm signal is supplied to the control device for stopping the motor and/or inverting the direction of rotation of the motor.

The method according to the invention is characterized in that the motor is driven with a first speed when the panel is in a predetermined first path of movement between the first and second position and that the motor is driven with a second speed when the panel is in a predetermined second path of movement between the first and second position, whilst the panel within the first path of movement is further away from a closed position of the panel than when the panel is in the second path of movement, and wherein the second speed is chosen to be less than the first speed, so that a squeezing of an object of a particular stiffness results per unit time in a greater increase of the current in the second path of movement than in the first path of movement, as a result of which in the second path of movement a squeezing is detected with a relatively high sensitivity.

The invention will presently be further elucidated with reference to the drawing.

In the drawing:
Fig. 1 shows a possible embodiment of a driver device according to the invention; and
Figs. 2.1- 2.6 show a number of graphs associated with different supply voltages for the motor of Fig. 1 and different objects having different stiffnesses that are squeezed, in which on the Y-axis the number 10 corresponds to a motor current of 1 A, a motor speed of 100 r.p.m. and a squeeze force of 100 N, and the X-axis plots the time for a period in which a panel of the system according to Fig. 1 closes.

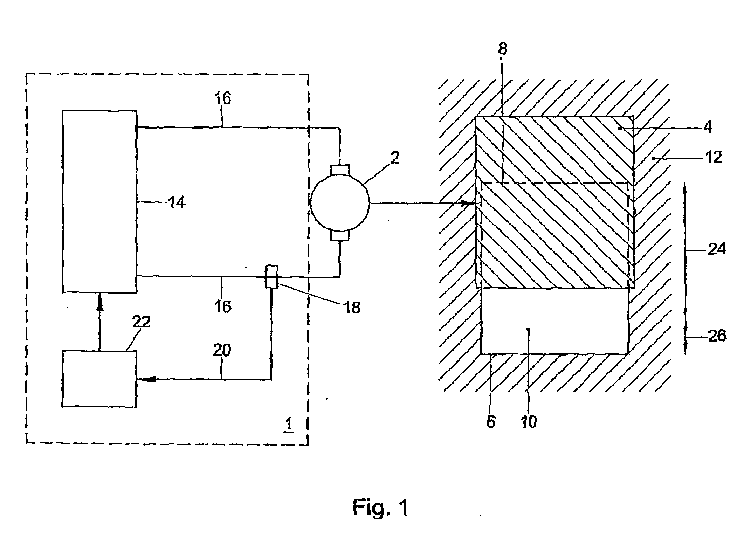

In Fig. 1, reference numeral 1 designates a driver device for electrically driving a motor 2 for sliding a panel 4 of an electric window or sliding roof of a vehicle. Panel 4 is slidable between a first position 6 and a second position 8. In this example, these two positions are extreme positions; however, this is not requisite. In the first extreme position 6 an opening 10 of a vehicle 12 is closed by a panel 4. In the second extreme position, the opening is at least in part cleared by the panel. In this example, in the second extreme position 8 the opening 10 is cleared entirely by the panel 4.

The driver device 1 is provided with a supply circuit 14 for generating a supply voltage which is supplied via electric lines 16 to the motor 2.

The driver device 1 is further provided with a detection circuit 18 for detecting the magnitude of the current through the lines 16. In this example, the detection circuit 18 is included in one of the lines 16. In this example, the detection circuit 18 is designed as a detection circuit known per se for detecting the current through the motor for detecting the possible squeezing of an object between the panel 4 and the opening 10. The detection circuit 18 is arranged for generating an alarm signal on a line 20 when the magnitude of the current I through the line 16, or a quantity that can be derived therefrom, such as an increase of the magnitude of the current or an increase of the magnitude of'the current per unit time, exceeds at least one predetermined threshold value. The supply circuit 14 is likewise of a commonly known type and is arranged to vary the supply voltage for varying the rotational speed of the motor 2. The driver device is further provided with a control device 22 which controls the supply circuit 14 for varying the speed of the motor 2.

In this example, the alarm signal generated by the detection circuit is supplied via line 20 to the control device 22 when on the basis of an increase of the magnitude of the current through line 16 a squeezing is detected. In that case, the control device 22 can stop the motor or invert the direction of rotation of the motor, so that squeezing is ended.

The control device 22 is further arranged to cause the motor 2 to run with a first speed when the panel is in a predetermined first path of movement 24 located between the first 6 and second 8 extreme positions. Further, the control device 22 is arranged to cause the motor to run with a second speed when the panel is in a predetermined second path of movement 26 which is likewise located between the first and second extreme positions. In this example, the first and second speeds are predetermined.

When the panel is within the first path of movement 24, the panel 4 is located further from the closed position 6 than when the panel is in the second path of movement 26. Further, the second speed is lower than the first speed. As a consequence of all this, a squeezing of an object having a particular stiffness S (N/mm) in the second path of movement results in a greater increase per unit time of the current I through the lines 16 than in the first path of movement, so that in the second path of movement a squeezing can be detected by the detection circuit 18 with a relatively high sensitivity. Accordingly, squeezing can be detected more accurately in the second path of movement than in the first path of movement in the case where the driver device is also arranged to be able to detect a squeezing in the first path of movement. However, it is hot requisite that the driver device detects squeezing events in the first path of movement. In a preferred embodiment, however, the driver device does.

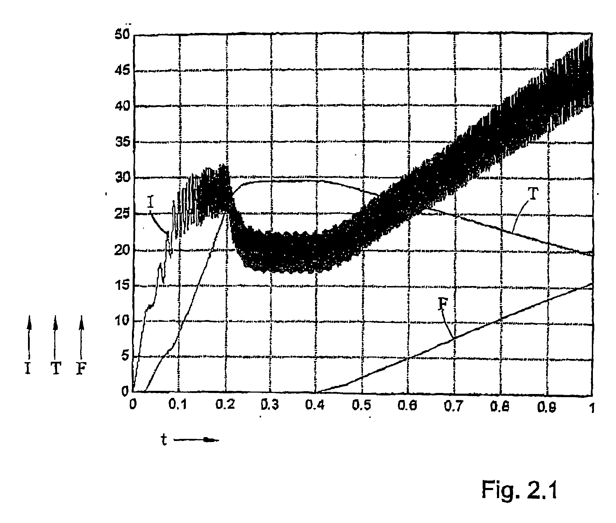

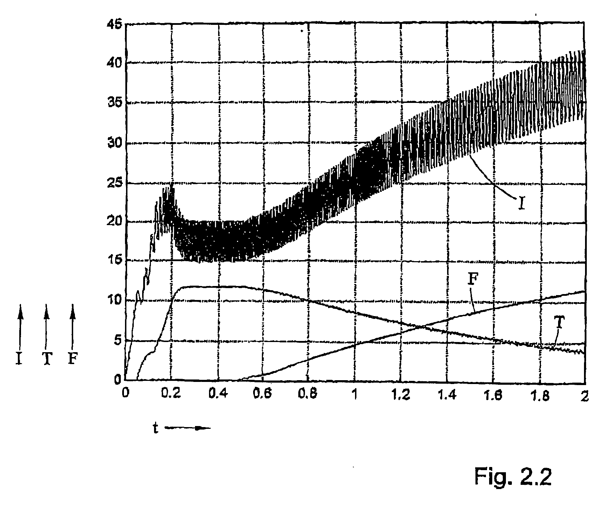

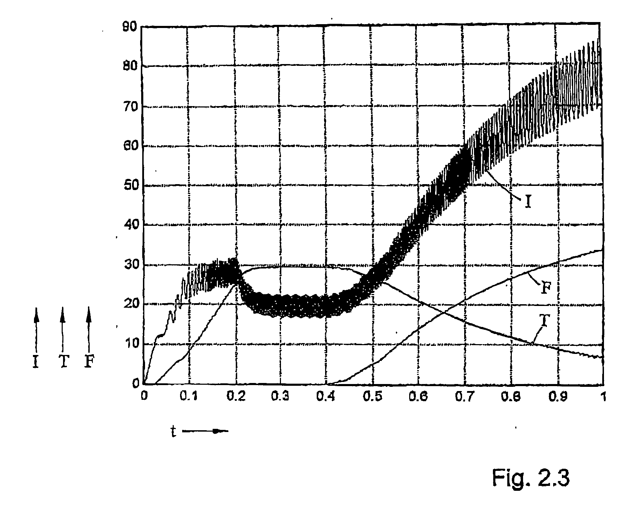

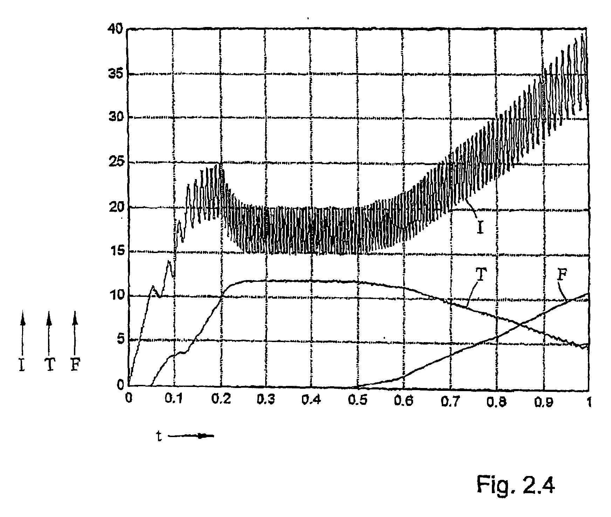

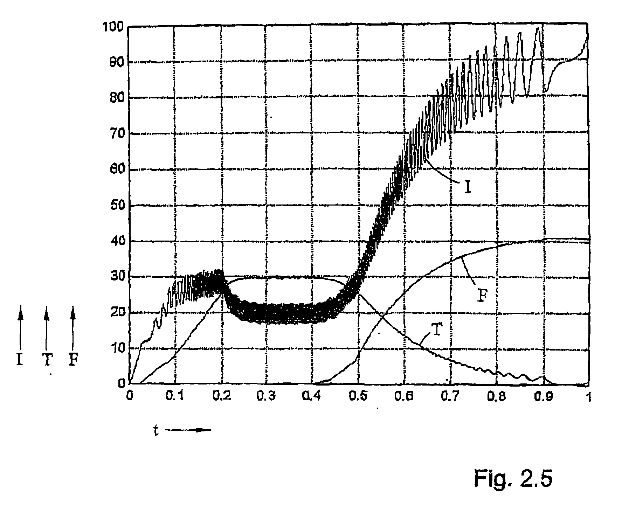

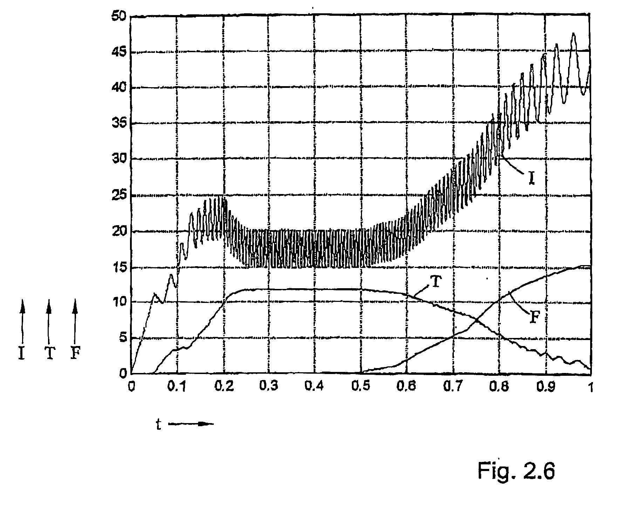

The above will be further elucidated with reference to Figs. 2.1-2.6.

**Table 1**

| **Fig.** | **S N/mm** | **Ub(V)** | **I1(A)** | **I2(A)** | **I for 100 N** |
|---|---|---|---|---|---|
| | | | | | |
| 2.1 | 5 | 12 | 2.0 | 3.5 | 3.5 |
| 2.2 | 5 | 6 | 1.8 | 3.6 | 1.9 |
| 2.3 | 20 | 12 | 2.0 | 3.2 | 1.2 |
| 2.4 | 20 | 6 | 1.8 | 3.3 | 1.6 |
| 2.5 | 65 | 12 | 2.0 | 3.0 | 1.0 |
| 2.6 | 65 | 6 | 1.8 | 3.3 | 1.5 |

As can be seen in Table 1, in Fig. 2.1 a supply voltage of 12 Volts is supplied to the motor 2. An object having a stiffness of 5 N/mm is squeezed. In Fig. 2.2 the situation is shown where a voltage of 6V is supplied to the motor 2 and an object again having a stiffness S of 5 N/mm is squeezed. In the situation of Fig. 2.1, at time t=0 sec., the panel is in the second extreme position 8 which, in this example, corresponds to a complete opening of the opening 10. At time t=0 sec., the control device 22 controls the supply circuit 14 for it to proceed to supply a voltage of 12 V to the motor 2. It is clear to see that between t=0 sec. and t=0.25 sec. the speed T of the motor runs up to about 300 r.p.m. The current I through the line 16 likewise runs up fast until time t=0.2 sec., whereafter the current I decreases somewhat because the speed has meanwhile stabilized. Between the period t=0 sec. and t=0.4 sec. the panel slowly slides towards closure. At time t=0.4 sec., an object 24 is clamped between the panel 4 and an edge 26 of the opening 10 of the vehicle 12. Fig. 2.1 shows that from time t=0.4 sec. the squeeze force starts to run up and at time t=0.8 sec. has reached a value of about 100N. The current I at time t=0.8 sec. has run up to about 3.5 A. At time t=0.4 sec. the current was still about 2.0 A.

All this has been summarized for Fig. 2.1 in Table 1. Table 1 also shows that the current I as a result of a squeeze force F of 100 N has run up by 1.5 A.

In Figs. 2.2-2.6 corresponding situations are shown and briefly summarized in Table 1.

From the Table it follows that the motor current at which 100 N arises can be raised by:
- reducing the stiffness S of the squeezed object; and
- reducing the supply voltage U of the motor.

A reduction of the supply voltage of the motor corresponds to a reduction of the speed of the motor, that is, a reduction of the number of revolutions of the motor.

That at a higher rotational speed of the motor 2 the current runs up less fast in the event of squeezing is because an exerted squeeze force is caused by the amount of energy stored in the motor on the one hand and the rise of the current on the other hand. Accordingly, if there is more energy stored in the motor, the increase of the current will lag more behind the increase of the force of the squeezing. It is to be remembered here that the energy stored in the motor is proportional to the square of the rotational speed of the motor. Further, it appears that when the spring stiffness of the squeezed object is reduced, the lagging of the rise of the current is reduced. This is because upon a reduction of the spring stiffness the squeeze force will run up more slowly. This is because obtaining a particular squeeze force in the case of an object having a lesser stiffness requires the panel 4 to cover a greater path, which will take more time.

As, in accordance with the invention, the speed of the motor is reduced when the panel is in the second path of movement, the current will increase more than in the absence of the speed reduction. Thus, it appears from Table 1 that when an object having a stiffness S of 5 N/mm is squeezed at a relatively high motor speed associated with a supply voltage of 12 V, the current increases by 1.5 A at a 100 N squeeze, while at a lower speed as a result of a supply voltage of 6 V the current I increases by 1.9 A at a 100 N squeeze. If the object has a stiffness of 20 N/mm, the increase of the current at the high and low speed is 1.2 A and 1.6 A, respectively. If an object having a stiffness S of 65 N/mm is inserted, the current at a high and low speed increases by 1 A and 1.5 A, respectively.

The invention is based on the above-mentioned insight. In fact, as the speed of the motor when the panel is in the second path of movement is lower than the speed of the motor when the panel is in the first path of movement, a squeezing can be detected by the detection circuit with a relatively high sensitivity when an object is being squeezed when the panel is in the second path of movement.

In this example, it holds that the detection circuit generates the alarm signal mentioned when within a predetermined period of time the current I increases by more than a predetermined threshold value. This period of time can be set, for instance, at Δ t = 0.2 sec. The threshold value can be set, for instance, at 0.5 A. What is thus prevented is that variations in the current that result from fouling of the panel, temperature influences from outside and the like, give rise to the detection of false squeeze events. It is expressly mentioned here that this is only an example, where also other values can be chosen for the length of the predetermined period of time and the magnitude of the predetermined threshold value. In this example, an increase of the current is measured for detecting a squeezing. However, other variants are also conceivable, such as, for instance, measuring an absolute value of the current for detecting a squeezing. In that case, for instance, an alarm signal can be produced when the magnitude of the current exceeds a predetermined threshold value. Also conceivable are variants where a squeezing is established when the current increases by a predetermined value without imposing the requirement that this increase occur within the predetermined period Δ t = 0.2 sec. Such variants are each understood to fall within the scope of the invention.

Essential to the invention is that the second speed is lower than the first speed. All this has been realized in this example by applying a voltage of 12 V to the motor when it is in the first path of movement and applying a voltage of 6 V to the motor when it is in the second path of movement. It is also possible, however, to apply to the motor a pulse-width modulated square-wave voltage for setting the speed. In particular, it holds that the set speed in the second path of movement is about 50% of the set speed in the first path of movement. However, other variants are also possible. In this example, it holds that the first and second path of movement together form the path between the first extreme position 6 and the second extreme position 8. However, this is not requisite. For instance, while the first path of movement 24 links up with the second path of movement 26, it may not reach as far as the second extreme position 8. Thus, a third path of movement may be involved, where the control device is arranged to have the motor run at a third speed greater than the second speed when the panel is in the third path of movement.

In practice, the second path of movement 26 can have a length of, for instance, 200 mm. This is specifically the critical area where a head and/or a finger may be squeezed. The driver device may be so arranged that any squeezing is detected only in this critical area. If the panel is in the first path of movement, no squeezing is detected. It is also possible, however, that the detection device 18 is also active when the panel is in the first path of movement 24. If desired, for the first path of movement 24 a first threshold value can be used that is greater than the second threshold value which is used when the panel is in the second path of movement. This means that when the panel moves in the first path of movement 24 a squeezing is not detected until the squeeze force is greater than, for instance, 200 N. Naturally, other values are also possible. Such variants are each understood to fall within the scope of the invention.

## Claims

1. A driver device for electrically driving a motor for sliding a panel of an electric window or sliding roof of a vehicle between a first and second position, while an opening of the vehicle in the first position is closed by the panel and in the second position is at least in part cleared by the panel, the driver device being provided with a supply circuit for generating a supply voltage for driving the motor, the driver device further comprising a detection circuit for measuring the current through the motor for detecting the possible squeezing of an object between the panel and the opening, the detection circuit generating an alarm signal when the magnitude of the current, or a quantity derivable therefrom, such as an increase of the magnitude of the current or an increase of the magnitude of the current per unit time, exceeds at least one predetermined threshold value, **characterized in that** the supply circuit is arranged to vary the supply voltage for varying the speed of the motor, the driver device being further provided with a control device which controls the supply circuit for varying the speed of the motor, the control device being further arranged to cause the motor to run with a first speed when the panel is in a predetermined first path of movement between the first and second position and to cause the motor to run with a second speed when the panel is in a predetermined second path of movement between the first and second position, whilst the panel within the first path of movement is further away from the closed position of the panel than when the panel is in the second path of movement, and wherein the second speed is less than the first speed, so that a squeezing of an object of a particular stiffness results per unit time in a greater increase of the current in the second path of movement than in the first path of movement, as a result of which in the second path of movement a squeezing can be detected by the detection circuit with a relatively high sensitivity.

2. A driver device according to claim 1, **characterized in that** the second path of movement is located in a half of the complete path of movement between the first and second position that includes the closed position.

3. A driver device according to claim 1 or 2, **characterized in that** the second path of movement includes the closed position of the panel.

4. A driver device according to claim 3, **characterized in that** the second path of movement has a length of about 200 mm.

5. A driver device according to any one of the preceding claims, **characterized in that** the alarm signal is generated when within a predetermined period of time the current increases by more than a predetermined threshold value.

6. A driver device according to any one of the preceding claims, **characterized in that** the control device sets the second speed of the motor at a predetermined speed.

7. A driver device according to claim 6, **characterized in that** the second speed is less than the first speed by a predetermined value.

8. A driver device according to any one of the preceding claim 7, **characterized in that** the second speed is about fifty percent of the first speed.

9. A driver device according to any one of the preceding claims, **characterized in that** the first and the second path of movement together form the complete path between the first and second extreme position.

10. A driver device according to any one of the preceding claims, **characterized in that** the detection circuit detects a squeezing when the panel is in the first path of movement when a first threshold value of the at least one threshold value is exceeded and that the detection circuit detects a squeezing when the panel is in the second path of movement when a second threshold value of the at least one threshold value is exceeded.

11. A driver device according to any one of the preceding claims, **characterized in that** the alarm signal is supplied to the control device for stopping the motor and/or inverting the direction of rotation of the motor.

12. A method for detecting a squeezing by a motor-driven panel of an electric window or sliding roof of a vehicle, the panel being slidable between a first and a second position, while an opening of the vehicle in the first position is closed off by the panel and in the second position is at least in part cleared by the panel, wherein the motor is driven by a supply voltage and wherein the current through the motor is detected for detecting the possible squeezing of an object between the panel and the opening, wherein a squeezing is detected when the magnitude of the current, or a quantity derivable therefrom, such as an increase of the magnitude of the current or an increase of the magnitude of the current per unit time, exceeds at least one predetermined threshold value, **characterized in that** the motor is driven with a first speed when the panel is in a predetermined first path of movement between the first and second position and that the motor is driven with a second speed when the panel is in a predetermined second path of movement between the first and second position, whilst the panel within the first path of movement is further away from a closed position of the panel than when the panel is in the second path of movement, and wherein the second speed is chosen to be less than the first speed, so that a squeezing of an object of a particular stiffness in the second path of movement results per unit time in a greater increase of the current than in the first path of movement, as a result of which in the second path of movement a squeezing is detected with a greater accuracy.

13. A method according to claim 12, **characterized in that** the second path of movement is located in a half of the complete path of movement between the first and second position that includes the closed position.

14. A method according to claim 12 or 13, **characterized in that** the second path of movement includes the closed position of the panel.

15. A method according to claim 14, **characterized in that** the second path of movement has a length of about 200 mm.

16. A method according to any one of the preceding claims 13-16, **characterized in that** a squeezing is detected when within a predetermined period of time the current increases by more than a predetermined threshold value.

17. A method according to any one of the preceding claims 12-16, **characterized in that** the second speed of the motor is set at a predetermined speed.

18. A method according to claim 17, **characterized in that** the set speed is chosen to be less by a predetermined value than the speed with which the motor is set when the panel is in the first path of movement.

19. A method according to claim 18, **characterized in that** the second speed of the motor is set at a speed which is about fifty percent of the first speed of the motor.

20. A method according to any one of the preceding claims 12-19, **characterized in that** the first and the second path together form the path between the first and second position.

21. A method according to any one of the preceding claims 12-20, **characterized in that** a squeezing is detected when the panel is in the first path of movement when a first threshold value of the at least one threshold value is exceeded and that a squeezing is detected when the panel is in the second path of movement when a second threshold value of the at least one threshold value is exceeded.

22. A method according to any one of claims 12-21, **characterized in that**, when a squeezing is detected, the motor is stopped or the direction of rotation of the motor is inverted.

23. A sliding roof or electric window of a vehicle provided with a driver device according to any one of the preceding claims 1-11.

24. A vehicle provided with at least one sliding roof and/or at least one electric window according to claim 23.
